# DEMANDE DE BREVET EUROPEEN

(11) **EP 3 778 372 A1**
(43) Date de publication de la demande: **17.02.2021**
(21) Numéro de dépôt: 20190169.1
(22) Date de dépôt: 09.08.2020
(51) Int. Cl.: B63B 32/10

(54) **EMBARCATION, TELLE QU'UNE PLANCHE DE SURF OU DE PADDLE, A ASSISTANCE ELECTRIQUE CONTROLEE**

(30) Priorité: 12.08.2019 FR 1909139
(71) Demandeur: Motion Concept Group, 33500 Libourne (FR)
(72) Inventeur: QUENDEZ, Nicolas, 02810 Chézy-en-Orxois (FR)
(74) Mandataire: Cochonneau, Olivier

(57) **Abrégé**

L'invention concerne une embarcation pour le transport d'un utilisateur sur l'eau, comprenant des moyens de propulsion 1 permettant la progression de l'embarcation sur ou dans l'eau, un moteur 2 électrique pour délivrer une puissance d'entraînement des moyens de propulsion 1, une source 3 d'énergie électrique pour alimenter le moteur 2, une unité 4 électronique de contrôle du fonctionnement et l'alimentation du moteur 2, et des moyens de mesure 5, 6, 7 connectés à l'unité 4 pour mesurer la valeur d'au moins un paramètre donné parmi un paramètre relatif au moteur, un paramètre relatif à l'embarcation.

L'unité 4 reçoit au moins une valeur mesurée du paramètre, et adapte la puissance d'entraînement des moyens de propulsion 1 délivrée par le moteur 2, en fonction de la valeur reçue.

## Description

La présente invention concerne une embarcation à assistance électrique contrôlée, destinée à permettre de transporter un utilisateur sur l'eau. Elle trouve notamment une application au domaine des planches de surf, de paddle, ou encore des planches à voiles, ainsi qu'au domaine du kayak ou du canoë.

A titre d'exemple, une planche de surf a pour but de permettre à un utilisateur de glisser sur l'eau sous l'action de propulsion procurée par une vague. Généralement, en l'absence de vague dans une zone donnée où se trouve l'utilisateur, ce dernier, allongé sur la planche, utilise ses bras pour fournir la propulsion nécessaire à la planche pour atteindre une zone où une vague est formée ou en cours de formation.

Un autre exemple consiste dans une planche de paddle qui a, quant à elle, pour but de permettre à un utilisateur de glisser sur l'eau sous l'action de propulsion d'un utilisateur muni d'une pagaie. Comme pour une planche de surf, la planche de paddle peut également permettre à l'utilisateur de glisser sur l'eau sous l'action de propulsion procurée par une vague.

D'autres exemples existent d'embarcation qui permettent à un utilisateur de naviguer sur l'eau, au moyen d'une action de propulsion mécanique que l'utilisateur fournit lui-même directement ou par l'intermédiaire d'un moyen tel qu'une ou plusieurs pagaies ou rames, et/ou au moyen d'une action de propulsion fournie par l'environnement tel que du vent ou une vague.

Pour faciliter l'utilisation de ces embarcations, notamment pour faciliter la propulsion dans des zones ou à des moments où l'action de propulsion mécanique fournie par l'utilisateur ou par l'environnement n'est pas suffisante, on peut équiper ces embarcations d'une assistance électrique, c'est-à-dire d'un système de motorisation électrique qui entraîne des moyens de propulsion mécanique tels qu'une hélice.

On connaît par exemple du document US 2018065717 une planche de paddle gonflable à assistance électrique. Il est prévu dans ce document une électronique de contrôle configurée pour détecter que la pagaie de l'utilisateur est trop éloignée du paddle et couper alors le moteur.

On connaît également du document US 2008262666 une planche de surf à assistance électrique avec contrôle à distance de la motorisation au moyen d'un bracelet porté par l'utilisateur qui communique par voie non filaire avec l'électronique de contrôle, cette dernière étant configurée pour détecter une perte de signal provenant du bracelet et couper alors le moteur.

D'une façon générale, dans les embarcations à assistance électrique connues, le contrôle du moteur est effectué en fonction d'un dispositif porté par l'utilisateur. Cela nécessite donc une communication entre le dispositif en question et l'électronique de contrôle qui peut poser des problèmes de fiabilité dans certaines condition, et qui est dépendante de l'utilisateur.

En outre, de telles modalités de contrôle ne permettent pas un contrôle précis et optimisé de la puissance délivrée par le moteur électrique aux moyens mécaniques de propulsion.

Un des buts de l'invention est donc de résoudre notamment les problèmes précités. Ainsi, l'invention a notamment pour objectif de proposer une embarcation à assistance électrique avec une gestion plus efficace de cette assistance électrique.

L'invention a ainsi pour objet un embarcation, telle qu'une planche de surf ou de paddle, à assistance électrique, comprenant des moyens de propulsion aptes à permettre la progression de l'embarcation sur ou dans l'eau, un moteur électrique configuré pour délivrer une puissance d'entraînement des moyens de propulsion, une source d'énergie électrique configurée pour alimenter le moteur en énergie électrique, et une unité de contrôle électronique configurée pour contrôler le fonctionnement du moteur et l'alimentation du moteur en énergie électrique par la source.

L'embarcation comprend en outre des moyens de mesure connectés à l'unité de contrôle 4 et aptes à mesurer la valeur d'au moins un paramètre donné parmi un paramètre moteur relatif au fonctionnement du moteur, et un paramètre d'embarcation relatif au mouvement de l'embarcation.

Par ailleurs, l'unité de contrôle est configurée pour recevoir au moins une valeur du paramètre moteur et/ou du paramètre d'embarcation, mesurée par les moyens de mesure, et pour adapter la puissance d'entraînement des moyens de propulsion délivrée par le moteur, en fonction de la ou des valeurs de paramètre reçues.

Suivant certains mode de réalisation, l'embarcation comprend en outre une ou plusieurs des caractéristiques suivantes, prise(s) isolément ou suivant toutes les combinaisons techniquement possibles :
- les moyens de mesure comprennent des moyens aptes à mesurer l'intensité électrique consommée par le moteur, et l'unité de contrôle est configurée pour détecter une variation de l'intensité électrique consommée par le moteur, et pour faire varier l'alimentation électrique du moteur en fonction de la variation d'intensité électrique consommée détectée ;
- l'unité de contrôle est configurée pour détecter un dépassement, en augmentation ou en diminution, de l'intensité électrique consommée par le moteur au-delà d'un certain seuil déterminé, pendant une durée déterminée, et pour couper l'alimentation électrique du moteur dans le cas où l'intensité électrique consommée par le moteur dépasse, en augmentation ou en diminution, le seuil déterminé, pendant la durée déterminée ;
- le seuil déterminé est fonction d'au moins la vitesse de rotation du moteur, et la durée déterminée est fonctions d'au moins la vitesse de rotation du moteur et/ou de l'intensité électrique consommée par le moteur ;
- les moyens de mesure comprennent des moyens aptes à mesurer la vitesse de rotation du moteur, et l'unité de contrôle est configurée pour détecter une variation de la vitesse de rotation du moteur, et pour faire varier l'alimentation électrique du moteur en fonction de la variation de vitesse détectée ;
- l'unité de contrôle est configurée pour détecter un dépassement, en augmentation ou en diminution, de la vitesse de rotation du moteur, au-delà d'un certain seuil déterminé, pendant une durée déterminée, et pour couper l'alimentation électrique du moteur dans le cas où la vitesse de rotation du moteur dépasse, en augmentation ou en diminution, le seuil déterminé, pendant la durée déterminée ;
- le seuil déterminé est fonction d'au moins l'intensité électrique consommée par le moteur, et la durée déterminée est fonction d'au moins l'intensité électrique consommée par le moteur et/ou vitesse la vitesse de rotation du moteur ;
- le moteur comprend des moyens électroniques de contrôle, et les moyens aptes à mesurer l'intensité électrique consommée par le moteur et/ou la vitesse de rotation du moteur comprennent un dispositif électronique de mesure intégré aux moyens électroniques de contrôle du moteur ;
- les moyens de mesure comprennent des moyens, tels qu'une centrale inertielle, aptes à détecter la vitesse et/ou l'accélération de l'embarcation en translation selon un ou plusieurs des trois axes de déplacement du centre de gravité de l'embarcation, et/ou en rotation autour de l'un ou plusieurs des trois axes de rotation du centre de gravité de l'embarcation, et l'unité de contrôle est configurée pour détecter une variation de la vitesse et/ou de l'accélération de l'embarcation, et pour faire varier l'alimentation électrique du moteur en fonction de la variation de vitesse et/ou d'accélération détectée ;
- les moyens de mesure comprennent des moyens aptes à détecter une action de propulsion d'un utilisateur présent sur l'embarcation, tels qu'une caméra et/ou une centrale inertielle, et en ce que l'unité de contrôle est configurée pour détecter une variation de la fréquence d'action de propulsion d'un utilisateur présent sur l'embarcation, et pour faire varier l'alimentation électrique du moteur en fonction de la variation de la fréquence d'action de propulsion détectée.

Ainsi, l'embarcation à assistance électrique de l'invention permet de gérer cette assistance électrique de façon précise et optimisée, en fonction d'un ou plusieurs paramètres liés au moteur et/ou à l'embarcation.

Les caractéristiques et avantages de l'invention apparaîtront à la lecture de la description qui va suivre, donnée uniquement à titre d'exemple, et non limitative, en référence à la figure annexée suivante :

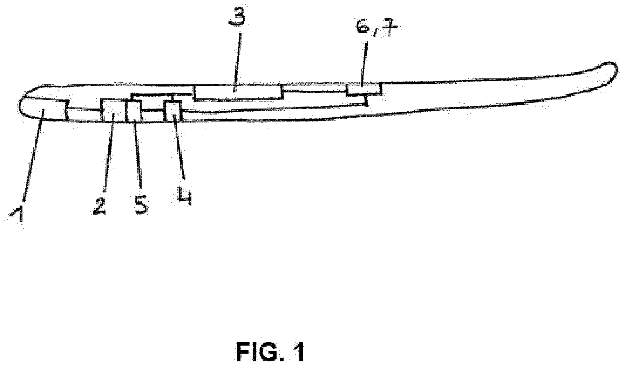

- Fig.1 représentation schématique d'un exemple d'embarcation de l'invention.

Cette figure illustre donc un exemple dans lequel l'embarcation est de type planche de surf. Cette planche est équipée d'une assistance électrique permettant d'assister l'utilisateur dans ses déplacements sur l'eau, par exemple pour rejoindre plus facilement une zone de surf.

La planche comprend ainsi des moyens de propulsion 1, telle qu'une hélice portée par un axe d'entraînement, aptes à permettre la progression de la planche sur l'eau. Dans d'autres exemples où l'embarcation est destinée à être totalement ou partiellement immergée, la progression de l'embarcation peut se faire dans l'eau.

Par ailleurs, la planche comprend un moteur 2 électrique configuré pour délivrer une puissance d'entraînement des moyens de propulsion 1, relié par exemple à l'axe d'entraînement de l'hélice.

Une source 3 d'énergie électrique, telle qu'une ou plusieurs batteries électriques, est également prévue, configurée pour alimenter le moteur 2 en énergie électrique.

Le fonctionnement du moteur 2, et son alimentation en énergie électrique par la source 3, sont contrôlés par une unité de contrôle 4 électronique. Cette unité de contrôle 4 électronique comprend des moyens de calcul, tels qu'un microcontrôleur. Elle est connectée à des moyens de mesure 5, 6, 7. Ces moyens de mesure 5, 6, 7 sont aptes à mesurer la valeur d'un ou plusieurs paramètres donnés, sur la base de quoi la puissance d'entraînement délivrée par le moteur 2 est adaptée.

Précisément, ces moyens de mesure 5, 6, 7 mesure la valeur d'un paramètre moteur et/ou d'un paramètre d'embarcation. Le paramètre moteur est un paramètre relatif au fonctionnement du moteur. Le paramètre d'embarcation est un paramètre relatif au mouvement de l'embarcation.

L'unité de contrôle 4 est donc quant à elle configurée pour recevoir une ou plusieurs valeurs du ou des paramètres en question, à savoir le paramètre moteur et/ou le paramètre d'embarcation, mesurées par les moyens de mesure 5, 6, 7.

En fonction de cette ou ces valeurs reçues, l'unité de contrôle 4 est en outre configurée pour adapter la puissance d'entraînement des moyens de propulsion 1 délivrée par le moteur 2.

Les moyens de mesure 5, 6, 7 comprennent par exemple des moyens 5 aptes à mesurer l'intensité électrique consommée par le moteur 2. Ils peuvent comprendre aussi des moyens 5 aptes à mesurer la vitesse de rotation du moteur 2. Ces deux moyens sont référencés avec la même référence numérique 5, car ils sont de préférence intégrés à des moyens électroniques de contrôle 5 intégrés dans le moteur 2 lui-même, sous la forme de dispositifs électroniques de mesure intégrés à ces moyens électroniques de contrôle 5.

A titre d'exemple, le moteur 2 peut être équipé d'un capteur intégré sur ou dans ce moteur 2, tel qu'un capteur à effet Hall qui détecte le passage des aimants en rotation. Cette information est donc disponible pour l'unité de contrôle 4, via les moyens électroniques de contrôle 5 intégrés au moteur 2.

Dans un autre exemple, les moyens électroniques de contrôle 5 intégrés au moteur 3 mesurent directement la force contre électromotrice générées par les bobinages du moteur 2, qui est fonction de la vitesse de rotation du moteur 2. De la même manière, cette information est donc disponible pour l'unité de contrôle 4, via les moyens électroniques de contrôle 5 intégrés au moteur 2, voire éventuellement directement mesurée par l'unité de contrôle 4.

En ce qui concerne l'intensité électrique consommée par le moteur 2, ce dernier peut embarquer un capteur d'intensité électrique qui renseigne les moyens électroniques 5 de contrôle intégrés au moteur 2. L'information est alors également disponible pour l'unité de contrôle 4, via ces moyens électroniques de contrôle 5.

Les moyens de mesure 5, 6, 7 peuvent également comprendre des moyens 6, tels qu'une centrale inertielle 6, aptes à détecter la vitesse et/ou l'accélération de l'embarcation en translation selon un ou plusieurs des trois axes de déplacement du centre de gravité de l'embarcation, et/ou en rotation autour de l'un ou plusieurs des trois axes de rotation du centre de gravité de l'embarcation.

Ces moyens de mesure 5, 6, 7 peuvent aussi comprendre des moyens 6, 7 aptes à détecter une action de propulsion d'un utilisateur présent sur l'embarcation, tels qu'une caméra 7 et/ou une centrale inertielle 6. La centrale inertielle 6 peut être la même que la centrale inertielle 6 utilisée dans les moyens de mesure 6 aptes la vitesse et/ou l'accélération de l'embarcation tels que présentés dans le paragraphe précédent, d'où l'utilisation de la même référence numérique 7.

Par action de propulsion d'une utilisateur présent sur l'embarcation, on entend l'action physique de cet utilisateur pour faire avancer l'embarcation dans une direction déterminée. Dans le cas d'une planche de surf, il peut s'agir des mouvements de bras dans l'eau réalisés par l'utilisateur allongé sur le ventre sur la planche pour faire avancer la planche de surf. Dans le cas d'une planche de paddle, il peut s'agir des mouvements de pagayage réalisés par l'utilisateur au moyen d'une pagaie pour faire avancer la planche de paddle. Dans le cas d'un canoë ou d'un kayak, il peut s'agir des mouvement de rame réalisés par l'utilisateur pour faire avancer l'embarcation.

L'unité de contrôle 4 peut donc utiliser les valeurs mesurées par un ou plusieurs des différents moyens de mesure 5, 6, 7 pour le contrôle du moteur 2.

Ainsi, l'unité de contrôle 4 est configurée pour détecter une variation de l'intensité électrique consommée par le moteur 2, à partir d'informations reçues de la part des moyens 5 aptes à mesurer l'intensité électrique consommée par le moteur 2 présentés plus haut. L'unité de contrôle 4 est alors configurée pour faire varier l'alimentation électrique du moteur 2 en fonction de la variation d'intensité électrique consommée détectée.

Plus précisément, l'unité de contrôle 4 est configurée pour détecter un dépassement de l'intensité électrique consommée par le moteur 2 au-delà d'un certain seuil déterminé, pendant une durée déterminée. Il peut s'agir d'un dépassement en augmentation, auquel cas le seuil déterminé est un seuil haut, ou en diminution, auquel cas le seuil déterminé est un seuil bas.

L'unité de contrôle 4 est lors configurée pour couper l'alimentation électrique du moteur 2 dans le cas où l'intensité électrique consommée par celui-ci dépasse, en augmentation ou en diminution, le seuil déterminé, pendant la durée déterminée.

Dans un mode de réalisation particulier, le seuil déterminé (haut ou bas) utilisé par l'unité de contrôle 4, est fonction d'au moins la vitesse de rotation du moteur 2. La durée déterminée est quant à elle fonction d'au moins la vitesse de rotation du moteur 2 et/ou d'au moins l'intensité électrique consommée par le moteur 2.

Ainsi, et à titre d'exemple, on considère la prise en compte par l'unité de contrôle 4 de deux vitesses de rotation du moteur 2 distinctes V1 et V2, avec V2 supérieure à V1. Si, alors que le moteur 2 tourne à la vitesse V1, l'intensité électrique consommée par le moteur 2 est inférieure à 4 ampères pendant 1500 ms, l'unité de contrôle 4 coupe le moteur 2, c'est-à-dire coupe l'alimentation électrique de celui-ci. Si, alors que le moteur 2 tourne à la vitesse V2, l'intensité électrique consommée par le moteur 2 est inférieure à 3 ampères pendant 1500 ms, l'unité de contrôle 4 coupe le moteur 2, c'est-à-dire coupe l'alimentation électrique de celui-ci.

En effet, si l'intensité électrique consommée par le moteur 2 diminue, alors que sa vitesse augmente, il peut y avoir deux raisons possibles.

Soit l'utilisateur est tombé de la planche, et celle-ci se retrouve en surface de l'eau, avec les moyens de propulsion 1, tels qu'une hélice, en partie hors de l'eau. L'hélice brasse alors beaucoup d'air et non plus uniquement de l'eau, ce qui réduit la consommation électrique du moteur 2, et accélère la rotation de l'hélice, donc du moteur 2. Ceci est détecté par l'unité de contrôle 4, comme expliqué précédemment, ce qui lui permet de faire varier la puissance d'entraînement délivrée par le moteur 2, jusqu'à l'arrêt complet éventuellement.

Soit l'utilisateur est monté sur sa planche et surfe sur une vague. Les moyens de propulsion 1 sont toujours immergés, mais ce n'est plus nécessairement ces moyens de propulsion 1 qui assurent la propulsion de la planche car la vague l'entraîne également. Dans ce cas, la consommation électrique du moteur 2 diminue, et la vitesse de l'hélice augmente (ceci peut aller jusqu'à l'entraînement de l'hélice en rotation dû à la vitesse de déplacement de la planche). Ceci est détecté par l'unité de contrôle 4, comme expliqué ci-dessus, ce qui lui permet de faire varier la puissance d'entraînement délivrée par le moteur 2, pour aboutir à la diminution de la vitesse de rotation du moteur jusqu'à l'arrêt complet ou en attente de récupération d'une certaine charge sur l'hélice pour augmenter de nouveau la vitesse de rotation du moteur.

L'unité de contrôle 4 peut également être configurée pour détecter une variation de la vitesse de rotation du moteur 2, à partir d'informations reçues de la part des moyens 5 aptes à mesurer la vitesse de rotation du moteur 2 présentés plus haut. L'unité de contrôle 4 est alors configurée pour faire varier l'alimentation électrique du moteur 2 en fonction de la variation de vitesse détectée.

Par ailleurs, si l'intensité électrique consommée par le moteur 2 augmente, cela peut être lié à un problème d'ordre technique, tel qu'un blocage de l'hélice, un enroulement d'algues autour de celle-ci, etc... Ceci est détecté par l'unité de contrôle 4, comme expliqué ci-dessus, ce qui lui permet d'arrêter d'urgence toute propulsion.

Plus précisément, l'unité de contrôle 4 est configurée pour détecter un dépassement de la vitesse de rotation du moteur 2 au-delà d'un certain seuil déterminé, pendant une durée déterminée. Ici encore, il peut s'agir d'un dépassement en augmentation, auquel cas le seuil déterminé est un seuil haut, ou en diminution, auquel cas le seuil déterminé est un seuil bas.

L'unité de contrôle 4 est lors configurée pour couper l'alimentation électrique du moteur 2 dans le cas où la vitesse de rotation de celui-ci dépasse, en augmentation ou en diminution, le seuil déterminé, pendant la durée déterminée.

Dans un mode de réalisation particulier, le seuil déterminé (haut ou bas) utilisé par l'unité de contrôle 4, est fonction d'au moins l'intensité électrique consommée par le moteur 2. La durée déterminée est quant à elle fonction d'au moins l'intensité électrique consommée par le moteur 2 et/ou d'au moins la vitesse de rotation du moteur 2.

L'unité de contrôle 4 peut également être configurée pour détecter une variation de la vitesse et/ou de l'accélération de l'embarcation, à partir d'informations reçues de la part des moyens 6 aptes à détecter cette vitesse et/ou cette accélération de l'embarcation présentés plus haut. L'unité de contrôle 4 est alors configurée pour faire varier l'alimentation électrique du moteur 2 en fonction de la variation de vitesse et/ou d'accélération détectée.

L'unité de contrôle 4 peut encore être configurée pour détecter une variation de la fréquence d'action de propulsion d'un utilisateur présent sur l'embarcation, à partir d'informations reçues de la part des moyens 6, 7 aptes à détecter une action de propulsion d'un utilisateur présent sur l'embarcation présentés plus haut. L'unité de contrôle 4 est alors configurée pour faire varier l'alimentation électrique du moteur (2) en fonction de la variation de la fréquence d'action de propulsion détectée.

Il est rappelé que la présente description est donnée à titre d'exemple, et n'est pas limitative de l'invention.

En particulier, et bien que trouvant une application particulièrement intéressante dans le domaine des planches de surf, l'invention ne se limite pas à une embarcation de type planche de surf, mais s'étend à des embarcations telles qu'une planche de paddle ou à voile. Plus généralement, l'invention ne se limite pas à une embarcation de type planche, mais s'étend à toute embarcation à assistance électrique, telles qu'un canoë ou un kayak.

## Revendications

1. Embarcation, telle qu'une planche de surf ou de paddle, à assistance électrique, comprenant des moyens de propulsion (1) aptes à permettre la progression de l'embarcation sur ou dans l'eau, un moteur (2) électrique configuré pour délivrer une puissance d'entraînement des moyens de propulsion (1), une source (3) d'énergie électrique configurée pour alimenter le moteur (2) en énergie électrique, et une unité de contrôle (4) électronique configurée pour contrôler le fonctionnement du moteur (2) et l'alimentation du moteur (2) en énergie électrique par la source (3),
**caractérisée en ce qu'**elle comprend des moyens de mesure (5, 6, 7) connectés à l'unité de contrôle (4) et aptes à mesurer la valeur d'au moins un paramètre donné parmi un paramètre moteur relatif au fonctionnement du moteur, et un paramètre d'embarcation relatif au mouvement de l'embarcation, et **en ce que** l'unité de contrôle (4) est configurée pour recevoir au moins une valeur du paramètre moteur et/ou du paramètre d'embarcation, mesurée par les moyens de mesure (5, 6, 7), et pour adapter la puissance d'entraînement des moyens de propulsion (1) délivrée par le moteur (2), en fonction de la ou des valeurs de paramètre reçues.

2. Embarcation selon la revendication 1, **caractérisée en ce que** les moyens de mesure (5, 6, 7) comprennent des moyens (5) aptes à mesurer l'intensité électrique consommée par le moteur (2), et **en ce que** l'unité de contrôle (4) est configurée pour détecter une variation de l'intensité électrique consommée par le moteur (2), et pour faire varier l'alimentation électrique du moteur (2) en fonction de la variation d'intensité électrique consommée détectée.

3. Embarcation selon la revendication 2, **caractérisée en ce que** l'unité de contrôle (4) est configurée pour détecter un dépassement, en augmentation ou en diminution, de l'intensité électrique consommée par le moteur (2) au-delà d'un certain seuil déterminé, pendant une durée déterminée, et pour couper l'alimentation électrique du moteur (2) dans le cas où l'intensité électrique consommée par le moteur (2) dépasse, en augmentation ou en diminution, le seuil déterminé, pendant la durée déterminée.

4. Embarcation selon la revendication 3, **caractérisée en ce que** le seuil déterminé est fonction d'au moins la vitesse de rotation du moteur (2), et la durée déterminée est fonction d'au moins la vitesse de rotation du moteur (2) et/ou d'au moins l'intensité électrique consommée par le moteur (2).

5. Embarcation selon l'une quelconque des revendications 1 à 4, **caractérisée en ce que** les moyens de mesure (5, 6, 7) comprennent des moyens (5) aptes à mesurer la vitesse de rotation du moteur (2), et **en ce que** l'unité de contrôle (4) est configurée pour détecter une variation de la vitesse de rotation du moteur (2), et pour faire varier l'alimentation électrique du moteur (2) en fonction de la variation de vitesse détectée.

6. Embarcation selon la revendication 5, **caractérisée en ce que** l'unité de contrôle (4) est configurée pour détecter un dépassement, en augmentation ou en diminution, de la vitesse de rotation du moteur (2), au-delà d'un certain seuil déterminé, pendant une durée déterminée, et pour couper l'alimentation électrique du moteur (2) dans le cas où la vitesse de rotation du moteur (2) dépasse, en augmentation ou en diminution, le seuil déterminé, pendant la durée déterminée.

7. Embarcation selon la revendication 6, **caractérisée en ce que** le seuil déterminé est fonction d'au moins l'intensité électrique consommée par le moteur (2), et la durée déterminée est fonction d'au moins l'intensité électrique consommée par le moteur (2) et/ou d'au moins la vitesse de rotation du moteur (2).

8. Embarcation selon l'une quelconque des revendications 2 à 7, **caractérisée en ce que** le moteur (2) comprend des moyens électroniques de contrôle (5), et **en ce que** les moyens (5) aptes à mesurer l'intensité électrique consommée par le moteur (2) et/ou la vitesse de rotation du moteur (2) comprennent un dispositif électronique de mesure intégré aux moyens électroniques de contrôle (5) du moteur (2).

9. Embarcation selon l'une quelconque des revendications 1 à 8, **caractérisée en ce que** les moyens de mesure (5, 6, 7) comprennent des moyens (6), tels qu'une centrale inertielle (6), aptes à détecter la vitesse et/ou l'accélération de l'embarcation en translation selon un ou plusieurs des trois axes de déplacement du centre de gravité de l'embarcation, et/ou en rotation autour de l'un ou plusieurs des trois axes de rotation du centre de gravité de l'embarcation, et **en ce que** l'unité de contrôle (4) est configurée pour détecter une variation de la vitesse et/ou de l'accélération de l'embarcation, et pour faire varier l'alimentation électrique du moteur (2) en fonction de la variation de vitesse et/ou d'accélération détectée.
